# EUROPEAN PATENT APPLICATION

(11) **EP 3 557 877 A1**
(43) Date of publication of application: **23.10.2019**
(21) Application number: 17878171.2
(22) Date of filing: 08.12.2017
(51) Int. Cl.: H04N 21/41

(54) **CONTROL METHOD AND DEVICE**

(30) Priority: 09.12.2016 CN 201611127277
(71) Applicant: ZTE Corporation, Shenzhen, Guangdong 518057 (CN)
(72) Inventor: GONG, Yahui, Shenzhen, Guangdong 518057 (CN)
(74) Representative: Aipex B.V.
(86) International application number: PCT/CN2017/115166
(87) International publication number: WO 2018/103733

(57) **Abstract**

Provided is a control method. The method includes: establishing a Wi-Fi display, WFD, connection with a controlled device through an established first real-time transport protocol, RTP, connection channel, where the first RTP connection channel is used to implement a negotiation between a master control device and the controlled device; when the WFD connection is completed based on the first RTP connection channel, establishing a second RTP connection channel with the controlled device; and sending a control message to the controlled device through the second RTP connection channel, where the control message carries a first remote-control control instruction for implementing a remote control function for the controlled device. A control device is further provided.

## Description

### TECHNICAL FIELD

The present invention relates to radio transmission technologies in the filed of telecommunications and, in particular, to a control method and a device.

### BACKGROUND

With the rapid development of intelligent terminals, controlled devices such as intelligent televisions, intelligent boxes and intelligent projectors are increasingly popularized. The above controlled devices are controlled through remote controllers to realize various applications and functions.

### SUMMARY

The following is a summary of the subject matter described herein in detail. This summary is not intended to limit the scope of the claims.

Embodiments of the present invention provide a control method and a device.

The technical solutions of the present invention are implemented as follows.

An embodiment of the present invention provides a control method. The method is applied to a master control device and includes following steps.

A Wi-Fi display (WFD) connection is established with a controlled device through an established first real-time transport protocol (RTP) connection channel, where the first RTP connection channel is configured to implement a negotiation between the master control device and the controlled device.

When the WFD connection is completed based on the first RTP connection channel, a second RTP connection channel is established with the controlled device, where the second RTP connection channel is configured to transmit a remote-control control instruction for the master control device to control the controlled device.

A control message is sent to the controlled device through the second RTP connection channel, where the control message carries a first remote-control control instruction for implementing a remote control function on the controlled device.

In the above solution, the step in which a control message is sent to the controlled device through the second RTP connection channel includes following steps.

Based on completion of establishment of the second RTP connection channel, a preset first user control interface is triggered for display.

The control message is generated based on a first operation of a user on the preset first user control interface, and the control message is sent to the controlled device through the second RTP connection channel.

In the above solution, the step in which a preset first user control interface is triggered for display includes a following step.

A floating window of the preset first user control interface is triggered for display.

An embodiment of the present invention provides a control method. The method is applied to a controlled device and includes following steps.

A WFD connection is established with a master control device through an established first RTP connection channel, where the first RTP connection channel is configured to implement a negotiation between the master control device and the controlled device.

When the WFD connection is completed based on the first RTP connection channel, a second RTP connection channel is established with the master control device, where the second RTP connection channel is configured to transmit a remote-control control instruction for the master control device to control the controlled device.

A control message sent by the master control device is received, and the control message is parsed to obtain a parsed first remote-control control instruction, where the first remote-control control instruction is configured to implement a remote control function on the controlled device.

The first remote control function is implemented according to the first remote-control control instruction.

In the above solution, the step in which the control message is parsed to obtain a parsed first remote-control control instruction includes following steps.

A message header of the control message is parsed.

In a case that the message header is a Wifi-display user positive channel (WCPC) message header, a message body of the control message is parsed to obtain the first remote-control control instruction.

In the above solution, after the message header of the control message is parsed, the method further includes a following step.

In a case that the message header is a non-WCPC message header, the control message is discarded.

An embodiment of the present invention provides a master control device. The master control device includes a first connection unit, a first establishment unit and a sending unit.

The first connection unit is configured to establish a WFD connection with a controlled device through an established first RTP connection channel, where the first RTP connection channel is configured to implement a negotiation between the master control device and the controlled device.

The first establishment unit is configured to, when the WFD connection is completed based on the first RTP connection channel, establish a second RTP connection channel with the controlled device, where the second RTP connection channel is configured to transmit a remote-control control instruction for the master control device to control the controlled device.

The sending unit is configured to send a control message to the controlled device through the second RTP connection channel, where the control message carries a first remote-control control instruction for implementing a remote control function for the controlled device.

In the above solution, the device further includes a display unit and a generation unit. The display unit is configured to trigger, based on completion of establishment of the second RTP connection channel, a preset first user control interface for display.

The generation unit is configured to generate the control message based on the first operation of the user on the preset first user control interface.

The sending unit is configured to send the control message to the controlled device through the second RTP connection channel.

In the above solution, the display unit is configured to trigger a floating window of the preset first user control interface for display.

An embodiment of the present invention provides a controlled device. The controlled device includes a second connection unit, a second establishment unit, a reception unit, a parsing unit and a remote control unit.

The second connection unit is configured to establish a WFD session connection with a master control device through an established first RTP connection channel, where the first RTP connection channel is configured to implement a negotiation between the master control device and the controlled device.

The second establishment unit is configured to, when the WFD connection is completed based on the first RTP connection channel, establish a second RTP connection channel with the master control device, where the second RTP connection channel is configured to transmit a remote-control control instruction for the master control device to control the controlled device.

The reception unit is configured to receive a control message sent by the master control device.

The parsing unit is configured to parse the control message to obtain a first remote-control control instruction, where the first remote-control control instruction is configured to implement a remote control function on the controlled device.

The remote control unit is configured to implement the first remote control function according to the first remote-control control instruction.

In the above solution, the parsing unit is configured to parse a message header of the control message; and in a case that the message header is a forward control function WCPC message header, parse a message body of the control message to obtain the first remote-control control instruction.

In the above solution, the parsing unit is configured to, after the message header of the control message is parsed, discard the control message in case that the message header is a non-WCPC message header.

An embodiment of the present invention further provides a computer-readable storage medium.

The computer-readable storage medium is configured to store computer-executable instructions, where when being executed by a processor, the computer-executable instructions implement any one of methods described above.

In the control method and device provided by the embodiments of the present invention, a WFD connection is established with a controlled device through an established first RTP connection channel, where the first RTP connection channel is configured to implement a negotiation between the master control device and the controlled device; when the WFD connection is completed based on the first RTP connection channel, a second RTP connection channel is established with the controlled device; and a control message is sent to the controlled device through the second RTP connection channel, where the control message carries a first remote-control control instruction for implementing a remote control function for the controlled device. Through the above solutions, since the master control device may establish one RTP connection channel based on the WFD connection in an environment of peer-to-peer networking, and realize the control over the controlled device through the RTP connection channel, the master control device may perform the remote control over the controlled device without being limited by distance and Wi-Fi, so that the limitation of distance and connection on the master control device when realizing a remote control function is avoided, thereby improving the flexibility of the master control device for realizing the remote control function.

Other aspects can be understood after the drawings and the detailed description are read and understood.

### BRIEF DESCRIPTION OF DRAWINGS

FIG. 1 is a structure diagram of a control system according to an embodiment of the present invention;
FIG. 2 is a flowchart one of a control method according to an embodiment of the present invention;
FIG. 3 is a flowchart of a Miracast connection process according to an embodiment of the present invention;
FIG. 4 is an example diagram of a preset first user control interface of a master control device according to an embodiment of the present invention;
FIG. 5 is another flowchart of a control method according to an embodiment of the present invention;
FIG. 6 is an interaction diagram of a control method according to an embodiment of the present invention;
FIG. 7 is a structure diagram one of a master control device according to an embodiment of the present invention;
FIG. 8 is a structure diagram two of a master control device according to an embodiment of the present invention;
FIG. 9 is a structure diagram three of a master control device according to an embodiment of the present invention.;
FIG. 10 is a structure diagram four of a master control device according to an embodiment of the present invention;
FIG. 11 is a structure diagram one of a controlled device according to an embodiment of the present invention; and
FIG. 12 is a structure diagram two of a controlled device according to an embodiment of the present invention.

### DETAILED DESCRIPTION

Currently, an intelligent terminal (i.e., a master control device) is utilized to control the above controlled device, so as to realize a remote control function. For example, the master control device and the controlled device are connected through Bluetooth, and instruction interaction is controlled through Bluetooth; or the master control device and the controlled device are connected through Wi-Fi, a remote controller interface is simulated at the master control device side, and a control instruction is transmitted to the controlled device through network, so as to realize the remote control function.

However, when realizing the remote control function by using Bluetooth, Bluetooth pairing needs to be performed on the master control device and the controlled device, occupying Bluetooth resources; besides, the master control device only can control the controlled device in a limited distance. When realizing the remote control function by using Wi-Fi, the remote control function can be realized only in a case that the master control device and the controlled device are located in the same local area network. In view of the above, current manners of realizing the remote control function through the master control device each have certain limitation and are inflexible.

Solutions in embodiments of the present invention will be described clearly and completely in conjunction with the drawings in the embodiments of the present invention.

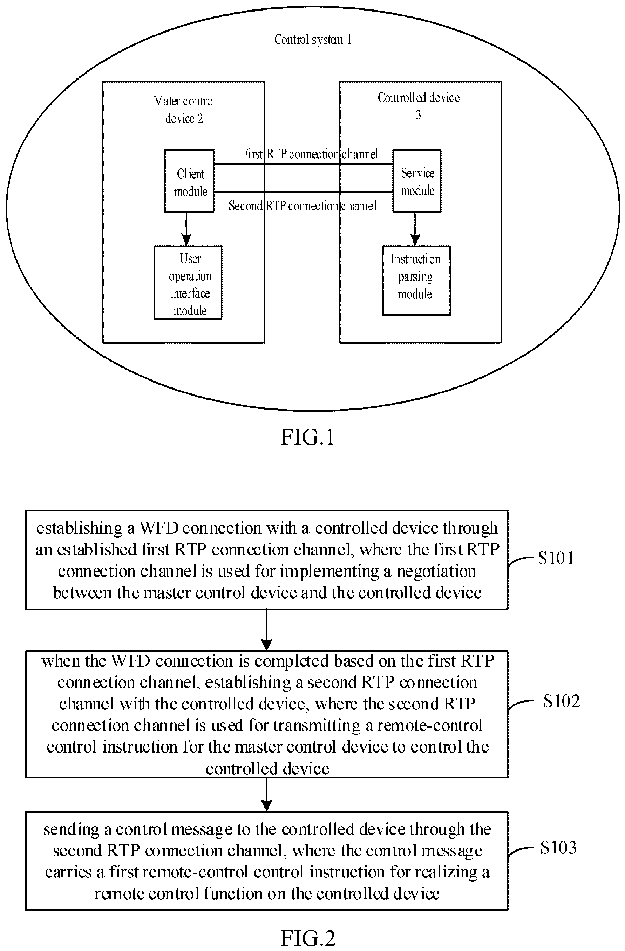

FIG. 1 shows a structure diagram of a control system, and a control method provided by an embodiment of the present invention is implemented based on the architecture of the control system. The control system 1 in the embodiment of the present invention includes a master control device 2 and a controlled device 3. The master control device 2 is provided with a user operation interface module and a client-side module (client module), and the controlled device 3 is provided with a server-side module (service module) and an instruction parsing module. A first RTP connection channel and a second RTP connection channel are established between the master control device 2 and the controlled device 3. The first RTP connection channel is mainly used for transmitting multimedia data, and the second RTP connection channel is used for transmitting a control instruction for the master control device to control the controlled device. The first RTP connection channel and the second RTP connection channel connect the service module and the client module.

Following embodiments are implemented based on the system architecture in FIG. 1.

### Example one

An embodiment of the present invention provides a control method. The method is applied to a master control device and, as shown in FIG. 2, includes steps S101, S102 and S103.

S101 includes establishing a WFD connection with a controlled device through an established first RTP connection channel, where the first RTP connection channel is used for implementing a negotiation between the master control device and the controlled device.

The control method provided by the embodiment of the present invention is suitable for a control process in an environment of peer-to-peer networking (P2P networking), such as a control process of a source, i.e., a transmission end (a Miracast source end) and a sink, i.e., a reception end (a Miracast target end) based on a miracast (i.e., WFD) protocol. The miracast, also called the Wi-Fi display, is a point-to-point multimedia sharing protocol formulated by Wi-Fi Alliance, and mainly aims to transmit multimedia data of the master control device to the controlled device through wireless transmission for display.

After the master control device and the controlled device perform the P2P connection successfully, the controlled device starts the service module and the master control device starts the client module.

It should be understood by those skilled in the art that the miracast supports a channel, a user input back channel (UIBC). The UIBC defines a way of returning a control signal of the reception end to the transmission end, that is, enable a user to control the transmission end through an input device of the reception end. For example, the transmission end is controlled by using the input device such as a touch control, a mouse, a keyboard or a game lever. The reception end may be an electronic device that receives transmitted multimedia data (e.g., audio/video data), such as a projector or a smart television, and the transmission end may be a terminal that stores to-be-transmitted multimedia data, such as a mobile phone or a computer, which are not specifically limited in the embodiment of the present invention.

In the embodiment of the present invention, the transmission end and the reception end may be respectively described as the master control device and the controlled device.

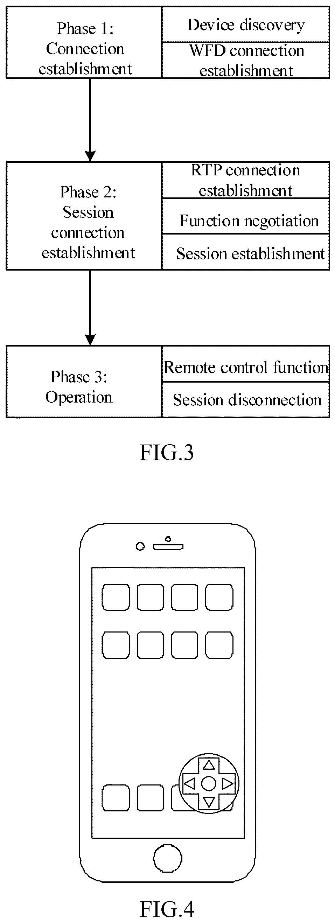

There are three phases: connection establishment, session establishment and operation. FIG. 3 shows an existing miracast connection process. As shown in FIG. 3, the connection establishment phase (i.e., phase 1) includes two operations of device discovery and WFD connection establishment; the session establishment phase (i.e., phase 2) includes operations such as RTP connection establishment, function negotiation and session establishment; and the operation phase (i.e. phase 3) includes two operations of suspension and resumption of multimedia data stream transmission and session disconnection. The embodiment of the present invention is that in the phase 2, the first RTP connection channel is established between the master control device and the controlled device, that is, the first RTP connection channel is established between the service module and the client module, and when the master control device performs a WFD session connection, the master control device performs a capability negotiation with the controlled device through the established first RTP connection channel, so that the WFD session connection between the master control device and the controlled device is achieved. The first RTP connection channel is used for implementing the negotiation between the master control device and the controlled device.

The first RTP channel is further used for transmitting multimedia data from the master control device to the controlled device. In the control method according to the embodiment of the present invention, the multimedia data may be transmitted between the master control device and the controlled device.

S102 includes, when the WFD connection is completed based on the first RTP connection channel, establishing a second RTP connection channel with the controlled device, where the second RTP connection channel is used for transmitting a remote-control control instruction for the master control device to control the controlled device.

After the WFD session connection between the master control device and the controlled device succeeds, the master control device may implement a process of establishing the second RTP connection channel with the controlled device. For example, the master control device may actively send an establishment request for the second RTP to the controlled device, and the controlled device responds to the establishment request and sends an establishment approval response to the master control device, thereby completing the establishment of the second RTP connection channel between the master control device and the controlled device. In a case that the WFD session connection between the master control device and the controlled device succeeds, a preset first user control interface is triggered for display based on the completion of the establishment of the second RTP connection channel. That is, the preset first user interface is displayed on a display interface of the master control device. The preset first user interface is used as an operation interface for the master control device to remotely control the controlled device. The preset first user interface is mainly controlled by the user operation interface module.

For example, as shown in FIG. 4, the master control device may display a floating window of the preset first user control interface. The preset first user control interface may be provided with a control operation platform in various forms such as a user touch interface, a physical key or a sensor input. FIG. 4 shows a user control interface in form of touch direction keys. Exemplarily, up and down keys can be defined to adjust the volume of the controlled device, left and right keys can be defined to adjust the focus of the controlled device, and a middle key can be defined to switch between automatic focusing and manual focusing.

S103 includes sending a control message to the controlled device through the second RTP connection channel, where the control message carries a first remote-control control instruction for realizing a remote control function on the controlled device.

After the master control device establishes the second RTP connection channel and displays the preset first user control interface, a user can obtain a first operation of the user through the preset first user control interface displayed on the master control device, such as an operation of clicking the up key. At this time, the master control device sends the control message to the controlled device through the second RTP connection channel based on the first operation.

For example, the control message is generated based on the first operation of the user on the preset first user control interface, and the control message is sent to the controlled device through the second RTP connection channel. For example, the first remote-control control instruction is generated based on the first operation of the user on the preset first user control interface, and the first remote-control control instruction is encapsulated to obtain the control message.

After receiving or obtaining the first operation of the user, the client module packs remote-control control information or data, encapsulates the data packet with a certain message header, and sends the encapsulated data packet to the service module through the second RTP connection channel.

That is, the control message sent by the master control device carries the first remote-control control instruction.

Exemplarily, FIG. 4 shows a user control interface in the form of touch direction keys. Here, up and down keys are defined to adjust the volume of the controlled device, left and right keys are defined to adjust the focus of the controlled device, and a middle key is defined to switch between automatic focusing and manual focusing. It is assumed that up and down keys are defined as 00010001 and 00010002, left and right keys are defined as 00020001 and 00020002, and the middle key is defined as 00020003. When the user presses up and down keys, the user operation interface module of the master control device (e.g., a mobile phone) generates a key instruction. The key instruction is 00010001. The user operation interface module of the master control device encapsulates the key instruction into volume00010001, i.e., the first remote-control control instruction, and sends the first remote-control control instruction to the client module of the master control module. The client module encapsulates the first remote-control control instruction into WCPC: volume00010001, i.e., the control message. The client module of the master control device sends the control message to the service module of the controlled device through the second RTP connection channel, so as to realize adjustment of the volume of the controlled device (realize a first remote control function).

It will be understood that since the master control device may establish one RTP connection channel based on the WFD connection in the environment of peer-to-peer networking, and realize the control over the controlled device through the RTP connection channel, the master control device may perform the remote control over the controlled device without being limited by distance and Wi-Fi, so that the limitation of distance and connection on the master control device when realizing the remote control function is avoided, thereby improving the applicability and flexibility of the master control device for realizing the remote control function.

### Example two

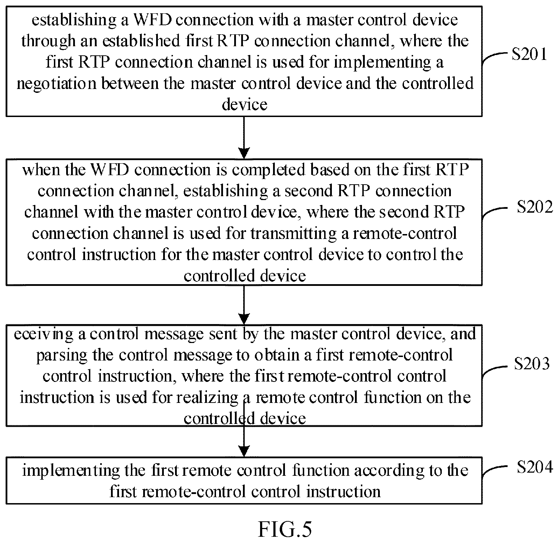

An embodiment of the present invention provides a control method. The method is applied to a controlled device and, as shown in FIG. 5, includes steps S201, S202, S203 and S204.

S201 includes establishing a WFD connection with a master control device through an established first RTP connection channel, where the first RTP connection channel is used for implementing a negotiation between the master control device and the controlled device.

The control method provided by the embodiment of the present invention is suitable for a control process in an environment of P2P networking, such as a control process of the transmission end and the reception end based on a miracast (i.e., WFD) protocol. The miracast, also called the Wi-Fi display, is a point-to-point multimedia sharing protocol formulated by Wi-Fi Alliance, and mainly aims to transmit multimedia data of the master control device to the controlled device through wireless transmission for display.

It should be understood by those skilled in the art that the miracast supports the UIBC. The UIBC defines a way of returning a control signal of the reception end to the transmission end, that is, enable a user to control the transmission end through an input device of the reception end. For example, the transmission end is controlled by using the input device such as a touch control, a mouse, a keyboard or a game lever. The reception end may be an electronic device that receives transmitted multimedia data (e.g., audio/video data), such as a projector or a smart television, and the transmission end may be a terminal that stores multimedia data to be transmitted, such as a mobile phone or a computer, which are not specifically limited in this embodiment of the present invention.

In the embodiment of the present invention, the transmission end and the reception end may be respectively described as the master control device and the controlled device.

The miracast connection process includes three phases of connection establishment, session establishment and operation. FIG. 3 shows an existing miracast connection process. As shown in FIG. 3, the connection establishment phase (i.e., phase 1) includes two operations of device discovery and WFD connection establishment; the session establishment phase (i.e., phase 2) includes operations such as RTP connection establishment, function negotiation and session establishment; and the operation phase (i.e. phase 3) includes two operations of suspension and resumption of multimedia data stream transmission and session disconnection. The embodiment of the present invention is that in the phase 2, the first RTP connection channel is established between the master control device and the controlled device, and when the master control device and the controlled device perform a WFD session connection, the master control device performs a capability negotiation with the controlled device through the established first RTP connection channel, so that the WFD session connection between the master control device and the controlled device is achieved. The first RTP connection channel is used for implementing the negotiation between the master control device and the controlled device.

The first RTP channel is further used for transmitting multimedia data from the master control device to the controlled device. In the control method according to embodiment of the present invention, the multimedia data may be transmitted between the master control device and the controlled device.

S202 includes, when the WFD connection is completed based on the first RTP connection channel, establishing a second RTP connection channel with the master control device, where the second RTP connection channel is used for transmitting a remote-control control instruction for the master control device to control the controlled device.

After the WFD session connection between the master control device and the controlled device succeeds, the controlled device may implement a process of establishing the second RTP connection channel with the master control device. For example, the controlled device receives a second RTP establishment request from the master control device, and the controlled device responds to such establishment request and sends an establishment approval response to the master control device, thereby completing the establishment of the second RTP connection channel between the master control device and the controlled device.

After the P2P connection succeeds, the service module monitors a protocol definition port (a port of the connection channel), and receives a data packet or a control message sent from the client module.

In the embodiment of the present invention, the number of the port of the established connection channel may be defined as 3002, the port 3002 is monitored in the service module, and synchronously, a data sending interface of the connection channel is created in the client module.

S203 includes receiving a control message sent by the master control device, and parsing the control message to obtain a first remote-control control instruction, where the first remote-control control instruction is used for realizing a remote control function on the controlled device.

After the second RTP connection channel is established between the controlled device and the master control device, the controlled device may receive the control message sent by the master control device through the second RTP, the control message carries or is encapsulated with the first remote-control control instruction, and the controlled device parses the control message to obtain the first remote-control control instruction.

For example, the control message includes a message header and a message body. The controlled device may parse the message header of the control message. If the message header is a Wifi-display user positive channel (WCPC) message header, whose representation is a remote-control control message implemented in the embodiment of the present invention, the controlled device continues to parse the message body of the control message to obtain the first remote-control control instruction. In contrast, if the message header is a non-WCPC message header, whose representation is not the remote-control control message implemented in the embodiment of the present invention, the control message is an error message, and the controlled device discards the control message.

In the embodiment of the present invention, since the first remote-control control instruction is encapsulated twice in the user operation interface module and the client module of the master control device, the operation in which the controlled device parses out that the message header is the WCPC is implemented in the service module of the controlled terminal, and then the service module sends the message body of the control message to an instruction parsing module of the controlled device for further parsing to obtain the first remote-control control instruction.

In the embodiment of the present invention, after parsing the data packet or the control message received by the service module, the instruction parsing module performs instruction parsing.

Exemplarily, the service module of the controlled terminal parses out that the message header of the control message is the WCPC message header, and sends the message body volumn00010001 of the control message to the instruction parsing module, and when the instruction parsing module parses out that the message header of the control message is volume, it is determined that the control message is a volume control message, and the first remote-control control instruction is 00010001.

S204 includes implementing the first remote control function according to the first remote-control control instruction.

After obtaining the first remote-control control instruction, the controlled device may implement the first remote control function according to the first remote-control control instruction. Specific remote control functions correspond to different remote-control control instructions, and the correspondence between the remote control functions and the remote-control control instructions may be set automatically, which is not limited in the embodiment of the present invention.

The first remote-control control instruction is a conversion representation of a key value or a function form generated by the first operation of the user, and in the embodiment of the present invention, the controlled device converts the first remote-control control instruction into a corresponding function event of the controlled device, and executes the function event to complete the first remote control function. The instruction parsing module converts the parsed remote-control control instruction into a key event or an action operation behavior of the controlled device, and executes the remote control function of the controlled device.

The first remote control function in the embodiment of the present invention may be functions such as volume adjustment, focusing and focusing manner switching, which is not limited in the embodiment of the present invention.

Exemplarily, the first remote-control control instruction is 00010001, and the master control device converts 00010001 into a key49 message (message about a volume increase key of a projector), simulates an actual controlled device key event, and makes the controlled device to execute a volume increase function.

It will be understood that since the master control device may establish one RTP connection channel based on the WFD connection in the environment of peer-to-peer networking, and implement the control over the controlled device through the RTP connection channel, the master control device may perform the remote control over the controlled device without being limited by distance and Wi-Fi, so that the limitation of distance and connection on the master control device when implementing the remote control function is avoided, thereby improving the applicability and flexibility of the master control device for implementing the remote control function.

### Example three

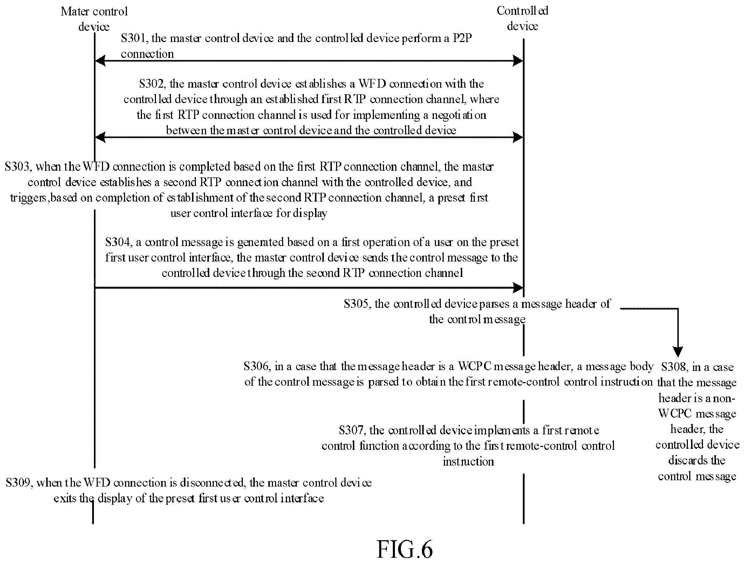

An embodiment of the present invention provides a control method. The method is described using a connection based on the miracast as an example and as shown in FIG. 6, may include steps S301 to S309.

In S301, the master control device and the controlled device perform a P2P connection.

The control method provided by the embodiment of the present invention is suitable for a control process in an environment of P2P networking, such as a control process of a source, i.e., a transmission end (a Miracast source end), and a sink, i.e., a reception end (a Miracast target end) based on the miracast (i.e., WFD) protocol. The miracast, also called the Wi-Fi display, is a point-to-point multimedia sharing protocol formulated by Wi-Fi Alliance, and mainly aims to transmit multimedia data of the master control device to the controlled device through wireless transmission for display.

It should be understood by those skilled in the art that the miracast supports a channel, a UIBC. The UIBC defines a way of returning a control signal of the reception end to the transmission end, that is, enable a user to control the transmission end through an input device of the reception end. For example, the transmission end is controlled by using the input device such as a touch control, a mouse, a keyboard, or a game lever. The reception end may be an electronic device that receives transmitted multimedia data (e.g., audio/video data), such as a projector or a smart television, and the transmission end may be a terminal that stores to-be-transmitted multimedia data, such as a mobile phone or a computer, which are not specifically limited in the embodiment of the present invention.

In the embodiment of the present invention, the transmission end and the reception end may be respectively described as the master control device and the controlled device.

In S302, the master control device establishes a WFD connection with the controlled device through an established first RTP connection channel, where the first RTP connection channel is used for implementing a negotiation between the master control device and the controlled device.

After the master control device and the controlled device perform the P2P connection, that is, after the point-to-point pairing, the WFD connection (i.e., the miracast connection) between the master control device and the controlled device is performed.

The miracast connection process includes three phases of connection establishment, session establishment and operation. FIG. 3 shows an existing miracast connection process. As shown in FIG. 3, the connection establishment phase (i.e., phase 1) includes two operations of device discovery and WFD connection establishment; the session establishment phase (i.e., phase 2) includes operations such as RTP connection establishment, function negotiation and session establishment; and the operation phase (i.e. phase 3) includes two operations of the remote control function such as suspension and resumption of multimedia data stream transmission, and session disconnection.

The embodiment of the present invention is that in the phase 2, the first RTP connection channel is established between the master control device and the controlled device, and when performing the WFD session connection, the master control device performs a capability negotiation with the controlled device through the established first RTP connection channel, so that the WFD session connection between the master control device and the controlled device is achieved. The first RTP connection channel is used for implementing the negotiation between the master control device and the controlled device.

In S303, when the WFD connection is completed based on the first RTP connection channel, the master control device establishes a second RTP connection channel with the controlled device, and triggers,based on completion of establishment of the second RTP connection channel, a preset first user control interface for display.

In the embodiment of the present invention, the description of S303 is the same as the description of S102 in the example one, which will not be repeated herein.

In S304, a control message is generated based on a first operation of a user on the preset first user control interface, the master control device sends the control message to the controlled device through the second RTP connection channel, where the control message carries a first remote-control control instruction for implementing a remote control function on the controlled device.

In the embodiment of the present invention, the description of S304 is the same as the description of S103 in the example one, which will not be repeated herein.

In S305, the controlled device parses a message header of the control message.

In S306, in a case that the message header is a WCPC message header, a message body of the control message is parsed to obtain the first remote-control control instruction.

In the embodiment of the present invention, the description of S303 to S306 is the same as the description of S203 in the example two, which will not be repeated herein.

In S307, the controlled device implements a first remote control function according to the first remote-control control instruction.

In the embodiment of the present invention, the description of S307 is the same as the description of S204 in the example two, which will not be repeated herein.

In S308, in a case that the message header is a non-WCPC message header, the controlled device discards the control message.

After the controlled device parses the message header of the control message, in a case that the message header is the non-WCPC message header, whose representation is not the remote-control control message implemented in the embodiment of the present invention, the control message is an error message, and the controlled device discards the control message.

In S309, when the WFD connection is disconnected, the master control device exits the display of the preset first user control interface.

After the master control device performs remote control on the controlled device and implements the first remote control function, the master control device completes the remote control function. Therefore, when the master control device does not perform remote control or data transmission on the controlled device, the master control device can disconnect the WFD connection from the controlled device, and when the WFD connection is disconnected, a control interface for controlling the controlled device is not implemented on the master control device, so that the master control device exits from the display of the preset first user control interface.

It will be understood that since the master control device may establish one RTP connection channel based on the WFD connection in the environment of peer-to-peer networking, and realize the control over the controlled device through the RTP connection channel, the master control device may perform the remote control over the controlled device without being limited by distance and Wi-Fi, so that the limitation of distance and connection on the master control device when realizing the remote control function is avoided, thereby improving the applicability and flexibility of the master control device for realizing the remote control function.

### Example four

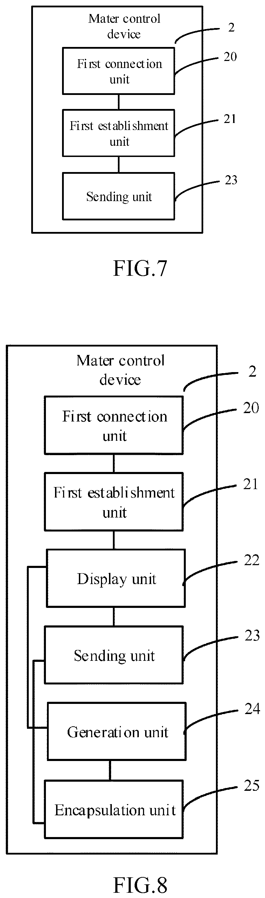

As shown in FIG. 7, an embodiment of the present invention provides a master control device 2.

The master control device 2 corresponds to the control method on the master control device side, and may include a first connection unit 20, a first establishment unit 21 and a sending unit 23.

The first connection unit 20 is configured to establish a WFD connection with a controlled device through an established first RTP connection channel, where the first RTP connection channel is configured to implement a negotiation between the master control device and the controlled device.

The first establishment unit 21 is configured to, when the WFD connection is completed based on the first RTP connection channel, establish a second RTP connection channel with the controlled device, where the second RTP connection channel is configured to transmit a remote-control control instruction for the master control device to control the controlled device.

The sending unit 23 is configured to send a control message to the controlled device through the second RTP connection channel, where the control message carries a first remote-control control instruction for implementing a remote control function on the controlled device.

As shown in FIG. 8, the master control device 2 may also include a display unit 22, a generation unit 24 and an encapsulation unit 25.

The display unit 22 is configured to trigger, based on completion of establishment of the second RTP connection channel, a preset first user control interface for display.

The generation unit 24 is configured to generate the control message based on a first operation of a user on the preset first user control interface.

The sending unit 23 is configured to send the control message to the controlled device through the second RTP connection channel.

The generation unit 24 is configured to generate a first remote-control control instruction based on the first operation of the user on the preset first user control interface.

The encapsulation unit 25 is configured to encapsulate the first remote-control control instruction to obtain the control message.

The display unit 22 may be configured to trigger a floating window of the preset first user control interface for display.

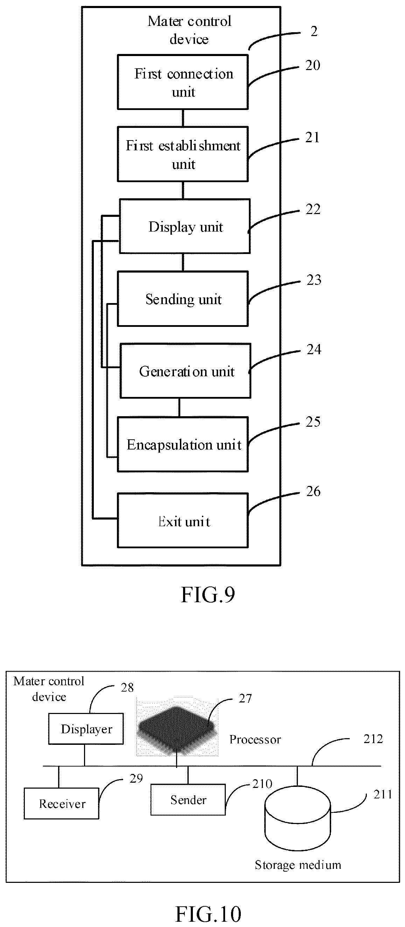

As shown in FIG. 9, the master control device 2 may further include an exit unit 26.

The exit unit 26 is configured to, after the control message is sent to the controlled device through the second RTP connection channel, exit the display of the preset first user control interface when the WDF connection is disconnected.

As shown in FIG. 10, in practical applications, the first establishment unit 21, the generation unit 24, the encapsulation unit 25 and the exit unit 26 may be implemented by a processor 27 located on the master control device, such as a central processing unit (CPU), a micro-processor unit (MPU), a digital signal processor (DSP), a field programmable gate array (FPGA) or the like. The display unit 22 is implemented by a displayer 28. The first connection unit 20 is implemented by a receiver 29 and a sender 210. The sending unit 23 is implemented by the sender 210. The master control device further includes a storage medium 211. The displayer 28, the storage medium 211, the receiver 29 and the sender 210 may be connected to the processor 27 through a system bus 212. The storage medium 211 is configured to store executable program codes including computer program instructions. The storage medium 211 may include a high-speed random access memory (RAM), and may also include a non-volatile memory, such as at least one disk memory.

The master control device in this embodiment of the present invention may be a terminal that stores multimedia data to be transmitted, such as a mobile phone, a computer and the like, which is not limited in this embodiment of the present invention.

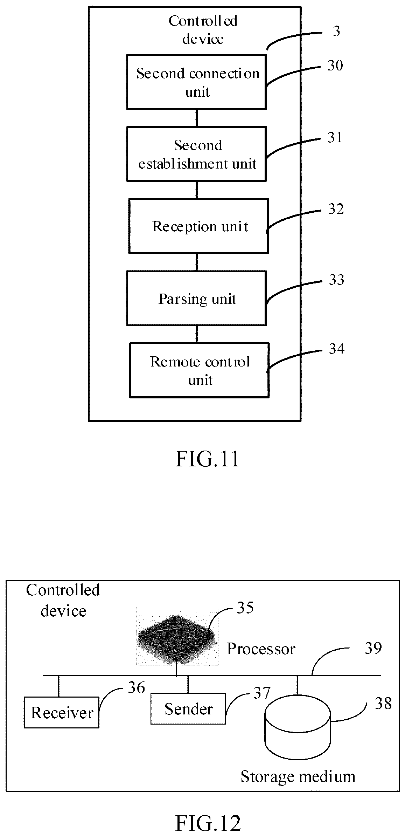

As shown in FIG. 11, an embodiment of the present invention provides a controlled device 3. The controlled device 3 corresponds to the control method on the controlled device side, and may include a second connection unit 30, a second establishment unit 31, a reception unit 32, a parsing unit 33 and a remote control unit 34.

The second connection unit 30 is configured to establish a WFD connection with a master control device through an established first RTP connection channel, where the first RTP connection channel is configured to implement a negotiation between the master control device and the controlled device.

The second establishment unit 31 is configured to, when the WFD connection is completed based on the first RTP connection channel, establish a second RTP connection channel with the master control device, where the second RTP connection channel is configured to transmit a remote-control control instruction for the master control device to control the controlled device.

The reception unit 32 is configured to receive a control message sent by the master control device.

The parsing unit 33 is configured to parse the control message to obtain a first remote-control control instruction, where the first remote-control control instruction is configured to implement a remote control function on the controlled device.

The remote control unit 34 is configured to implement a first remote control function according to the first remote-control control instruction.

The parsing unit 33 is configured to parse a message header of the control message; and in a case that the message header is a WCPC message header, parse a message body of the control message to obtain the first remote-control control instruction.

The parsing unit 33 may further be configured to, after the message header of the control message is parsed, discard the control message in a case that the message header is a non-WCPC message header.

As shown in FIG. 12, in practical applications, the second establishment unit 31, the parsing unit 33 and the remote control unit 34 may be implemented by a processor 35 located on the controlled device, such as a CPU, an MPU, a DSP, an FPGA or the like. The second connection unit 30 is implemented by a receiver 36 and a sender 37. The receiving unit 32 is implemented by the receiver 36. The controlled device further includes a storage medium 38. The storage medium 38, the receiver 36 and the sender 37 may be connected to the processor 35 through a system bus 39. The storage medium 38 is configured to store executable program codes including computer program instructions. The storage medium 38 may include a high-speed RAM, and may also include a non-volatile memory, such as at least one disk memory.

The controlled device in the embodiment of the present invention may be a digital device that receives transmitted multimedia data (e.g., audio/video data), such as a projector or a smart television, which is not specifically limited in this embodiment of the present invention.

An embodiment of the present invention further provides a computer-readable storage medium. The computer-readable storage medium is used to store computer-executable instructions, where when being executed by a processor, the computer-executable instructions execute the above-mentioned methods.

It will be understood that since the master control device may establish one RTP connection channel based on the WFD connection in the environment of peer-to-peer networking, and implement the control over the controlled device through the RTP connection channel, the master control device may perform the remote control over the controlled device without being limited by distance and Wi-Fi, so that the limitation of distance and connection on the master control device when realizing the remote control function is avoided, thereby improving the applicability and flexibility of the master control device for realizing the remote control function.

It should be understood by those skilled in the art that functional modules/units in all or part of the steps of the method, the system and the device disclosed above may be implemented as software, firmware, hardware and appropriate combinations thereof. In the hardware implementation, division of the functional modules/units mentioned in the above description may not correspond to division of physical components. For example, one physical component may have several functions, or one function or step may be executed jointly by several physical components. Some or all components may be implemented as software executed by processors such as digital signal processors or microcontrollers, hardware, or integrated circuits such as application specific integrated circuits. Such software may be distributed on a computer-readable medium, which may include a computer storage medium (or a non-transitory medium) and a communication medium (or a transitory medium). As is known to those skilled in the art, the term, computer storage medium, includes volatile and nonvolatile, removable and non-removable media implemented in any method or technology for storing information (such as computer-readable instructions, data structures, program modules or other data). The computer storage medium includes, but is not limited to, a random access memory (RAM), a read-only memory (ROM), an electrically erasable programmable read-only memory (EEPROM), a flash memory or other memory technologies, a compact disc read-only memory (CD-ROM), a digital versatile disc (DVD) or other optical disc storage, a magnetic cassette, a magnetic tape, a magnetic disk storage or other magnetic storage devices, or any other medium used for storing desired information and accessed by a computer. In addition, as is known to those skilled in the art, the communication medium generally includes computer-readable instructions, data structures, program modules or other data in modulated data signals such as carriers or other transmission mechanisms, and may include any information delivery medium.

The above are only exemplary embodiments of the present invention and are not intended to limit the scope of the present invention.

### INDUSTRIAL APPLICABILITY

In the control method and device provided by the embodiments of the present invention, a WFD connection is established with a controlled device through an established first RTP connection channel, where the first RTP connection channel is configured to implement a negotiation between the master control device and the controlled device; when the WFD connection is completed based on the first RTP connection channel, a second RTP connection channel is established with the controlled device; and a control message is sent to the controlled device through the second RTP connection channel, where the control message carries a first remote-control control instruction for implementing a remote control function on the controlled device. Through the above solutions, since the master control device may establish one RTP connection channel based on the WFD connection in an environment of peer-to-peer networking, and implement the control over the controlled device through the RTP connection channel, the master control device may perform the remote control over the controlled device without being limited by distance and Wi-Fi, so that the limitation of distance and connection on the master control device when realizing a remote control function is avoided, thereby improving the flexibility of the master control device for realizing the remote control function. Therefore, the present invention has industrial applicability.

## Claims

1. A control method, applied to a master control device, comprising:
establishing (S101) a Wi-Fi display, WFD, connection with a controlled device through an established first real-time transport protocol, RTP, connection channel, wherein the first RTP connection channel is configured to implement a negotiation between the master control device and the controlled device;
establishing (S102) a second RTP connection channel with the controlled device when the WFD connection is completed based on the first RTP connection channel, wherein the second RTP connection channel is configured to transmit a remote-control control instruction for the master control device to control the controlled device; and
sending (S103) a control message to the controlled device through the second RTP connection channel, wherein the control message carries a first remote-control control instruction for implementing a remote control function on the controlled device.

2. The method of claim 1, wherein the sending the control message to the controlled device through the second RTP connection channel comprises:
triggering ,based on completion of establishment of the second RTP connection channel, a preset first user control interface for display ; and
generating the control message based on a first operation of a user on the preset first user control interface, and sending the control message to the controlled device through the second RTP connection channel.

3. The method of claim 1, wherein the triggering the preset first user control interface for display comprises:
triggering a floating window of the preset first user control interface for display.

4. A control method, applied to a controlled device, comprising:
establishing (S201) a Wi-Fi display, WFD, connection with a master control device through an established first real-time transport protocol, RTP, connection channel, wherein the first RTP connection channel is configured to implement a negotiation between the master control device and the controlled device;
establishing (S202) a second RTP connection channel with the master control device when the WFD connection is completed based on the first RTP connection channel, wherein the second RTP connection channel is configured to transmit a remote-control control instruction for the master control device to control the controlled device; and
receiving (S203) a control message sent by the master control device, and parsing the control message to obtain a first remote-control control instruction, wherein the first remote-control control instruction is configured to implement a remote control function on the controlled device; and
implementing (204) the first remote control function according to the first remote-control control instruction.

5. The method of claim 4, wherein the parsing the control message to obtain the first remote-control control instruction comprises:
parsing a message header of the control message; and
in a case that the message header is a Wifi-display user positive channel, WCPC, message header, parsing a message body of the control message to obtain the first remote-control control instruction.

6. The method of claim 5, wherein after parsing the message header of the control message, the method further comprises:
in a case that the message header is a non-WCPC message header, discarding the control message.

7. A master control device (2), comprising:
a first connection unit (20), which is configured to establish a Wi-Fi display, WFD, connection with a controlled device through an established first real-time transport protocol, RTP, connection channel, wherein the first RTP connection channel is configured to implement a negotiation between the master control device and the controlled device;
a first establishment unit (21), which is configured to, when the WFD connection is completed based on the first RTP connection channel, establish a second RTP connection channel with the controlled device, wherein the second RTP connection channel is configured to transmit a remote-control control instruction for the master control device to control the controlled device; and
a sending unit (23), which is configured to send a control message to the controlled device through the second RTP connection channel, wherein the control message carries a first remote-control control instruction for implementing a remote control function on the controlled device.

8. The master control device (2) of claim 7, further comprising:
a display unit (22), which is configured to trigger, based on completion of establishment of the second RTP connection channel, a preset first user control interface for display; and
a generation unit (24), which is configured to generate the control message based on a first operation of a user on the preset first user control interface; and
wherein the sending unit (23) is configured to send the control message to the controlled device through the second RTP connection channel.

9. The master control device (2) of claim 7, wherein
the display unit (22) is configured to trigger a floating window of the preset first user control interface for display.

10. A controlled device (3), comprising:
a second connection unit (30), which is configured to establish a Wi-Fi display, WFD, session connection with a master control device through an established first real-time transport protocol, RTP, connection channel, wherein the first RTP connection channel is configured to implement a negotiation between the master control device and the controlled device;
a second establishment unit (31), which is configured to, when the WFD connection is completed based on the first RTP connection channel, establish a second RTP connection channel with the master control device, wherein the second RTP connection channel is configured to transmit a remote-control control instruction for the master control device to control the controlled device;
a reception unit (32), which is configured to receive a control message sent by the master control device;
a parsing unit (33), which is configured to parse the control message to obtain a first remote-control control instruction, wherein the first remote-control control instruction is configured to implement a remote control function on the controlled device; and
a remote control unit (34), which is configured to implement the first remote control function according to the first remote-control control instruction.

11. The controlled device (3) of claim 10, wherein
the parsing unit (33) is configured to:
parse a message header of the control message; and
in a case that the message header is a Wifi-display user positive channel, WCPC, message header, parse a message body of the control message to obtain the first remote-control control instruction.

12. The controlled device (3) of claim 11, wherein
the parsing unit (33) is further configured to, after the message header of the control message is parsed, discard the control message in a case that the message header is a non-WCPC message header.

13. A computer-readable storage medium, which is configured to store computer-executable instructions, wherein when being executed by a processor, the computer-executable instructions implement the method of any one of claims 1 to 3.

14. A computer-readable storage medium, which is configured to store computer-executable instructions, wherein when being executed by a processor, the computer-executable instructions implement the method of any one of claims 4 to 6.
